# EUROPEAN PATENT APPLICATION

(11) **EP 3 135 437 A1**
(43) Date of publication of application: **01.03.2017**
(21) Application number: 15782647.0
(22) Date of filing: 24.04.2015
(51) Int. Cl.: B25F 5/00

(54) **ELECTRIC TOOL, AND DEVICE, SYSTEM AND METHOD FOR COLLECTING REMOTE INFORMATION ABOUT ELECTRIC TOOL**

(30) Priority: 24.04.2014 CN 201410169493; 25.04.2014 CN 201410172304; 27.11.2014 CN 201410697490
(71) Applicant: Positec Power Tools (Suzhou) Co., Ltd, Suzhou, Jiangsu 215123 (CN)
(72) Inventor: WONG, Ka tat Kelvin, Suzhou Jiangsu 215123 (CN); HUANG, Wenjin, Suzhou Jiangsu 215123 (CN)
(74) Representative: Stuttard, Garry Philip
(86) International application number: PCT/CN2015/077402
(87) International publication number: WO 2015/161829

(57) **Abstract**

The present invention discloses an electric tool remote information collection system, comprising an electric tool and a server, where an information collection unit, wherein said information collection unit of said electric tool collects maintenance warning information and/or research and development reference information; a communication unit sends said maintenance warning information and/or research and development reference information to said server; and said server performs communication with said electric tool to collect said maintenance warning information and/or research and development reference information. A beneficial effect of the present invention is: via disposing an information collection unit to collect proper information and send it to a server, an electric tool manufacturer can provide a specific service and product for a user, for example, provide preventive maintenance information for said electric tool and researching and developing specific products for users of a specific area or type.

## Description

### BACKGROUND

### Technical Field

The present invention relates to the field of electric tools, and in particular, to an electric tool.

The present invention also relates to an electric tool remote information collection apparatus.

The present invention also relates to an electric tool remote information collection system.

The present invention also relates to an electric tool remote information collection method.

### Background

Electric tools include handheld tools, such as electric drills, screwdrivers, reciprocating saws, electric routers, and electric hammers, also include bench tools, such as bench saws and diagonal cutters, and also include gardening tools such as mowers, weed eaters, and pruning shears. Currently, the electric tools are developed toward intelligentization, and there are various intelligent tools, for example, robotic gardening tools, such as robotic mowers and robotic grass collectors, that can automatically move, work, and get charged within a specified scope; and intelligent electric drills and the like that can automatically determine the material of a workpiece, so as to automatically drill a hole and halt.

It is inevitable that the electric tools may have a fault because of wire aging, fuse blowing, improper use, and the like. With regard to diagnosing a fault of an electric tool, usually, professional personnel are needed to dismantle the electric tool and perform tests and analysis to determine a fault type, a fault reason, or the like. Such a diagnosing method is relatively tedious. There are also some electric tools that indicate specific faults of the electric tools by disposing alarm indication units. A fault indicated in such an alarm indication manner has a relatively monotonous type, and indicated information is relatively limited, which is unfavorable to analysis and diagnosis on a relatively complex fault.

The electric tool inevitably gradually ages and wears during a use process, so that the electric tool needs maintenance, for example, needs battery replacement or replacement of a working head such as a blade. Currently, a user needs to personally find the aging and wear and personally perform maintenance, and if the user is inexperienced, it is easy to miss a maintenance opportunity, resulting in that a machine cannot work normally when it needs to be used, which upsets arrangement of the user. With regard to a robotic device, because a user usually does not directly manipulate a tool to work, it is more difficult to find that a machine already needs maintenance. Moreover, because a manufacturer can no longer monitor the electric tool, the user cannot be prompted timely that the machine needs maintenance.

Likewise, because a conventional electric tool, after being sold, leaves a monitoring scope of a manufacturer, it is difficult for the manufacturer to make specific improvements on the electric tool with respect to a real usage mode, a usage environment, and difficulties encountered during a use process.

In addition, currently, as the pace of human life speeds up, various tools (for example, household devices, electric tools, fuel tools, or pneumatic tools) become increasingly globally popular. Because they have automatic working procedures or forceful power, operators do not need to use relatively great physical strength to manipulate them. People can be relieved from cumbersome household tasks or heavy work, so as to save a great amount of energy, thereby obtaining more leisure time. Such an automated household device is also referred as an automatic working device, comprising an automatic vacuum cleaner used for cleaning a room, and further comprising an automatic mower mainly used for a family garden. An electric tool is a tool powered by a battery pack or a tool directly powered by an alternating current power supply, comprising an electric hammer, an electric drill, a swing, a weed eater, and the like. A fuel tool is a tool mainly powered by base oil such as gasoline or diesel oil, comprising a fuel weed eater, a fuel mower, and the like. A pneumatic tool is a tool that uses compressed air to actuate a pneumatic motor to output kinetic energy and work, comprising a pneumatic wrench, a pneumatic screwdriver, a pneumatic hammer, a pneumatic mill, and the like.

Currently, one of the reasons that affect popularity of the tools is their high prices, resulting in narrow scopes of target customers of the products and limited sales volumes; moreover, the reason why it is difficult to reduce the prices of the tools is the limited sales volumes, so that it is difficult to carry out mass production to reduce costs. In particular, with respect to a category of intelligent mowers, because they are seasonally used and have a relatively long idle time, users are unwilling to pay much money to buy physical products.

If a commercial mode is changed, and selling a tool is changed to renting a tool, or it is only necessary to pay a total amount of money for a tool by installments, one-time investment of a user is greatly reduced, and further, use of the tool can greatly improve life quality of the user, so that users would be greatly increased. However, the change of the commercial mode would bring a new challenge to a service provider. For example, a user, after renting a device, might not pay a renewal or simply not return the device, or a user, after purchasing a tool by a loan, does not pay installments at predetermined times or does not pay a sufficient amount of money by installments, and corresponding dunning work consumes labor and material resources, but produces little effect, which also causes reduction of user experience and great troubles and loss to the service provider. After a service scale is enlarged, management difficult and possible loss may be further abruptly increased.

### SUMMARY

In view of this, an objective of the present invention is to provide an electric tool capable of remotely sending an electric tool use status, so as to enable a manufacturer to specifically serve a user.

To solve those problems existing in the background, the present invention provides a electric tool, comprising: a housing; a motor located inside said housing; a working assembly, driven by said motor to carry out specific work; an information collection unit, wherein said information collection unit collects maintenance warning information and/or research and development reference information, said maintenance warning information provides information related to whether said electric tool needs maintenance, and said research and development information provides information for reference by subsequent research and development of said electric tool; an information processing unit, which processes said maintenance warning information and/or research and development reference information according to a preset procedure; and a communication unit, wherein said communication unit performs communication with an external server and sends said processed maintenance warning information and/or research and development reference information to said server.

Preferably, said electric tool is an intelligent tool.

Preferably, said electric tool is a robotic gardening tool.

Preferably, said electric tool is a robotic mower.

Preferably, said robotic gardening tool can be docked with an external charging station to get charged, said charging station is provided with a charging station communication unit, and said communication unit performs communication with said server via said charging station communication unit.

Preferably, said communication unit receives maintenance type information sent by said server, said maintenance type information indicates a type of maintenance that said electric tool needs to perform, and said electric tool comprises a display unit configured to display said maintenance type information.

Preferably, said maintenance warning information comprises component status information, and said component status information comprises at least one of a motor total running time length, a brush wear status, a blade total working time length, a blade wear status, a battery cycle, and a battery full voltage.

Preferably, said research and development reference information comprises environment information and/or usage mode information; said environment information comprises at least one of grass status information, humidity information, temperature information, temperature difference information, illumination information, and lawn area information; and said usage mode information comprises at least one of a usage frequency, a working time plan, a working time segment, a working time length, a working current, and a motor rotation speed.

To solve those problems existing in the background, the present invention provides an electric tool remote information collection apparatus, comprising a server, which comprises a server communication unit, wherein: said server communication unit performs communication with a communication unit of an electric tool to collect maintenance warning information and/or research and development reference information, said maintenance warning information provides information related to whether said electric tool needs maintenance, and said research and development information provides information related to subsequent research and development of said electric tool.

Preferably, said server further comprises a maintenance warning analysis module and a maintenance warning notification module, said maintenance warning analysis module analyzes, according to a preset procedure, said received maintenance warning information to obtain maintenance type information, said maintenance type information indicates a type of maintenance that said electric tool needs to perform; and after receiving said maintenance type information, said maintenance warning notification module sends an instruction that notifies a user of a maintenance type that said electric tool needs.

Preferably, said maintenance warning information comprises component status information, and said component status information comprises at least one of a motor total running time length, a brush wear status, a blade total working time length, a blade wear status, a battery cycle, and a battery full voltage; and said maintenance type comprises at least one of replacing a motor, replacing a brush, replacing a blade, and replacing a battery.

Preferably, said maintenance warning notification module notifies said user of said maintenance type that said electric tool needs by using an e-mail, an SMS, network communications software, or social network information; or sends said maintenance type information to said electric tool.

Preferably, said server also comprises a research and development reference information processing module and a research and development reference information output module, said research and development reference information processing module processes, according to said preset procedure, said received research and development reference information; and said research and development information output module outputs said processed research and development reference information.

Preferably, said research and development reference information comprises environment information and/or usage mode information; said environment information comprises at least one of grass status information, humidity information, temperature information, temperature difference information, illumination information, and lawn area information; and said usage mode information comprises at least one of a usage frequency, a working time plan, a working time segment, a working time length, a working current, and a motor rotation speed.

To solve those problems existing in the background, the present invention provides an electric tool remote information collection system, comprising an electric tool and a server, wherein said electric tool comprises: a housing; a motor located inside said housing; a working assembly, driven by said motor to carry out specific work; an information collection unit, wherein said information collection unit collects maintenance warning information and/or research and development reference information, said maintenance warning information provides information related to whether said electric tool needs maintenance, and said research and development information provides information related to subsequent research and development of said electric tool; an information processing unit, which processes said maintenance warning information and/or research and development reference information according to a preset procedure; and a communication unit, wherein said communication unit performs communication with said server and sends said maintenance warning information and/or research and development reference information sent by said information processing unit to said server; and said server comprises a server communication unit, wherein said server communication unit performs communication with said communication unit of said electric tool to collect said maintenance warning information and/or research and development reference information.

Preferably, said electric tool is an intelligent tool.

Preferably, said electric tool is a robotic gardening tool.

Preferably, said electric tool is a robotic mower.

Preferably, said robotic gardening tool can be docked with an external charging station to get charged, said charging station is provided with a charging station communication unit, and said communication unit performs communication with said server via said charging station communication unit.

Preferably, said server further comprises a maintenance warning analysis module and a maintenance warning notification module, said maintenance warning analysis module analyzes, according to said preset procedure, said received maintenance warning information to obtain maintenance type information, said maintenance type information indicates a type of maintenance that said electric tool needs to perform; and said maintenance warning notification module sends an instruction that notifies a user of a maintenance type that said electric tool needs.

Preferably, said maintenance warning notification module notifies said user by using an e-mail, an SMS, network communications software, or social network information.

Preferably, said maintenance warning information comprises component status information, and said component status information comprises at least one of a motor total running time length, a brush wear status, a blade total working time length, a blade wear status, a battery cycle, and a battery full voltage; and said maintenance type comprises at least one of replacing a motor, replacing a brush, replacing a blade, and replacing a battery.

Preferably, said server also comprises a research and development reference information processing module and a research and development reference information output module, said research and development reference information analysis module processes, according to said preset procedure, said received research and development reference information; and said research and development information output module outputs said processed research and development reference information.

Preferably, said research and development reference information comprises environment information and/or usage mode information; said environment information comprises at least one of grass status information, humidity information, temperature information, temperature difference information, illumination information, and lawn area information; and said usage mode information comprises at least one of a usage frequency, a working time plan, a working time segment, a working time length, a working current, and a motor rotation speed.

To solve those problems existing in the background, the present invention provides an electric tool remote information collection method, comprising the following steps: collecting maintenance warning information and/or research and development reference information, wherein said maintenance warning information provides information related to whether said electric tool needs maintenance, and said research and development information provides information related to subsequent research and development of said electric tool; processing said maintenance warning information and/or research and development reference information according to a preset procedure; and sending said maintenance warning information and/or research and development reference information sent by said information processing unit to a server.

Preferably, the method further comprises the following steps: analyzing, according to said preset procedure, said maintenance warning information to obtain maintenance type information, wherein said maintenance type information indicates a type of maintenance that said electric tool needs to perform; and sending an instruction that notifies a user of a maintenance type that said electric tool needs.

Preferably, said maintenance warning information comprises component status information, and said component status information comprises at least one of a motor total running time length, a brush wear status, a blade total working time length, a blade wear status, a battery cycle, and a battery full voltage; and said maintenance type comprises at least one of replacing a motor, replacing a brush, replacing a blade, and replacing a battery.

Preferably, notifies said user of said maintenance type that said electric tool needs by using an e-mail, an SMS, network communications software, or social network information.

Preferably, the method further comprises the following steps: processing, according to said preset procedure, said research and development reference information received by said server; and outputting said processed research and development reference information.

Preferably, said research and development reference information comprises environment information; said environment information comprises at least one of grass status information, humidity information, temperature information, temperature difference information, illumination information, and lawn area information.

Preferably, said research and development reference information comprises usage mode information; said usage mode information comprises at least one of a usage frequency, a working time plan, a working time segment, a working time length, a working current, and a motor rotation speed.

As compared with the prior art documents, a beneficial effect of the present invention is: by means of disposing an information collection unit to collect proper information and send it to a server, an electric tool manufacturer can provide a specific service and product for a user, for example, provide preventive maintenance information for said electric tool and researching and developing specific products for users of a specific area or type.

Another objective of the present invention is to provide an electric tool capable of preferably diagnosing a fault thereof.

An electric tool comprises a housing, a motor located inside said housing, a transmission mechanism driven by said motor, and a control circuit configured to control said motor, and said electric tool further comprises an information collection unit configured to collect running data of said electric tool, an information processing unit configured to analyze and process the data collected by said information collection unit to determine a fault type, a storage unit that stores a processing result of said information processing unit, a communication control unit that controls whether to exchange information with an external device, and a communication unit that performs information transmission to said external device.

In one of the embodiments, said running data of the electric tool collected by the information collection unit comprises a rotation speed of the motor, a working current of the motor, voltages on two ends of the motor, and a running of the motor.

In one of the embodiments, the electric tool further comprises a battery that provides power for the electric tool.

In one of the embodiments, the running data of the electric tool collected by the information collection unit further comprises an output voltage of the battery, an output current of the battery, and a use time of the battery.

In one of the embodiments, the communication unit performs data transmission to the external device in a Bluetooth transmission manner, a WiFi transmission manner, a data cable transmission manner, or a mobile communication transmission manner.

In one of the embodiments, the communication unit is a USB interface.

In one of the embodiments, the storage unit further stores the data collected by the information collection unit.

In one of the embodiments, the information processing unit is a microcomputer.

In one of the embodiments, the electric tool is an electric drill, a screwdriver, a reciprocating saw, an electric router, or an electric hammer.

The information processing unit of the foregoing electric tool analyzes and processes the information collected by the information collection unit to obtain fault information and stores the fault information in the storage unit. When fault diagnosis is performed, the external device only needs to perform communication with the electric tool by using the communication unit, so as to read the fault information stored in the storage unit. In this way, the electric tool can implement diagnosis of the fault. Because the information collection unit can collect multiple types of information, so as to help the information processing unit perform analysis and processing, so that more types of fault information can be identified. The electric tool has an advantage of preferably diagnosing a fault thereof.

Another objective of the present invention is to provide a remotely lockable electric tool, so as to prevent a user from defaulting a rent or defaulting payment for an installment loan.

The technical solution used in the present invention for resolving a problem in the prior art is: a remotely lockable electric tool, comprising: a control module, which controls running of the tool; a working module, which is connected to the control module and is instructed by the control module to execute a specific assignment; a wireless communication module, which performs communication with a server side and transfers a received external signal to the control module, where the electric tool further comprises a locking module, which forbids the working module from working after a locking instruction of the control module is received; and after determining that an external signal of a preset type is received, the control module sends a corresponding instruction to the locking module according to a preset rule corresponding to the preset type.

Preferably, the external signal of the preset type is a locking signal sent by the server side, and a corresponding preset rule is that: after a preset time after receiving the locking signal, the control module sends a locking instruction to the locking module, and after receiving the locking instruction, the locking module forbids the working module from working.

Preferably, the external signal of the preset type is an unlocking signal sent by the server side, and a corresponding preset rule is that: after determining that the received external signal is an unlocking signal sent by the server end, the control module sends an unlocking instruction to the locking module, and after receiving the unlocking instruction, the locking module unlocks the working module.

Preferably, the electric tool is a rental-type electric tool, the external signal of the preset type comprises a tenancy signal carrying a lease expiration time, and a corresponding preset rule is that: the control module stores the lease expiration time to the storage module and sends a locking instruction to the locking module at a preset time after lease expiration.

Preferably, the control module instructs, at a preset time before the lease expiration, the electric tool to send a prompt signal to prompt the user that the lease is about to expire.

Preferably, the wireless communication module receives the tenancy signal and transfers it to the control module, the control module updates the lease expiration time, if the lease expiration time is later than a current time, the control module sends an unlocking instruction to the locking module, and after receiving the unlocking instruction, the locking module unlocks the working module.

Preferably, the electric tool is an installment payment-type electric tool, the external signal of the preset type comprises an installment payment balance pay-off signal sent by the server, and a corresponding preset rule is that: after determining that the received external signal is an installment payment balance pay-off signal sent by the server side, the control module sends a permanent unlocking instruction to the locking module, and after receiving the permanent unlocking instruction, the locking module permanently unlocks the electric tool.

Preferably, the external signal of the preset type comprises an installment agreement signal carrying an installment payment expiration time, and a corresponding preset rule is that: the control module stores the installment payment expiration time to the storage module and sends a locking instruction to the locking module at a preset time after installment payment expiration.

Preferably, the control module instructs, at a preset time before the installment payment expiration, the automatic working device to send a prompt signal to prompt the user that the installment agreement of the installment payment is about to expire.

Preferably, the wireless communication module receives the installment agreement signal indicating the installment payment expiration and transfers it to the control module, the control module updates the installment payment expiration time, if the installment payment expiration time is later than a current time, the control module sends an unlocking instruction to the locking module, and after receiving the unlocking instruction, the locking module unlocks the tool.

Preferably, the wireless communication module is a WiFi module or a cellular communication module.

Preferably, the electric tool comprises a fuel tool, a pneumatic tool, or an electric tool.

Preferably, the electric tool is an automatic working device, comprising: a control module, which controls running of the automatic working device; a walking module, which is connected to the control module and is instructed by the control module to actuate the automatic working device to walk; a working module, which is connected to the control module and is instructed by the control module to execute a specific assignment; a wireless communication module, which performs communication with a server side and transfers a received external signal to the control module; and a locking module, which locks, after receiving a locking instruction of the control module, the automatic working device, where after determining that an external signal of a specific type is received, the control module sends, according to a preset track corresponding to the preset type, the locking instruction to the locking module.

The present invention further provides a electric tool rental system, comprising a rental-type electric tool and further comprising a server side; the rental-type electric tool comprises: a control module, which controls running of the tool; a working module, which is connected to the control module and is instructed by the control module to execute a specific assignment; a wireless communication module, which performs communication with the server side and transfers a received external signal to the control module; a locking module, which locks, after receiving a locking instruction of the control module, the tool, where after determining that an external signal of a specific type is received, the control module sends, according to a preset rule corresponding to the preset type, the locking instruction to the locking module; the server side comprises: a control module, a storage module, and a communication module, the storage module stores tenancy time information, and the control module instructs, according to the tenancy time information, the communication module to send the external signal to the tool.

Preferably, the external signal of the preset type is a locking signal sent by the server side based on a lease expiration time, and a corresponding preset rule is: after a preset time after receiving the external signal of the preset type, the control module sends a locking instruction to the locking module.

Preferably, after determining that the received external signal is an unlocking signal sent by the server side, the control module sends an unlocking instruction to the locking module, and after receiving the unlocking instruction, the locking module unlocks the electric tool.

Preferably, the external signal of a preset type is a tenancy signal carrying a lease expiration time, and a corresponding preset rule is that: the control module stores the lease expiration time to the storage module and sends a locking instruction to the locking module at a preset time after lease expiration.

The present invention further provides a electric tool installment payment system, comprising an installment payment-type electric tool and further comprising a server side; the installment payment-type electric tool comprises: a control module, which controls running of the tool; a working module, which is connected to the control module and is instructed by the control module to execute a specific assignment; a wireless communication module, which performs communication with the server side and transfers a received external signal to the control module; a locking module, which locks, after receiving a locking instruction of the control module, the tool, where after determining that an external signal of a specific type is received, the control module sends, according to a preset rule corresponding to the preset type, the locking instruction to the locking module; the server side comprises: a control module, a storage module, and a communication module, the storage module stores installment payment expiration time information, and the control module instructs, according to the installment payment expiration time information, the communication module to send the external signal to the tool.

Preferably, the external signal of the preset type is a locking signal sent by the server side at a time that is set based on an installment payment expiration time, and a corresponding preset rule is: after a preset time after receiving the external signal of the preset type, the control module sends a locking instruction to the locking module.

Preferably, after determining that the received external signal is an unlocking signal sent by the server side, the control module sends an unlocking instruction to the locking module, and after receiving the unlocking instruction, the locking module unlocks the tool.

Preferably, the external signal of the preset type comprises an installment agreement signal carrying an installment payment expiration time, and a corresponding preset rule is that: the control module stores the installment payment expiration time to the storage module and sends a locking instruction to the locking module at a preset time after installment agreement expiration.

The present invention further provides an automatic working device rental system, comprising a rental-type automatic working device and a server side; the rental-type automatic working device comprises: a control module, which controls running of the automatic working device; a walking module, which is connected to the control module and is instructed by the control module to actuate the automatic working device to walk; a working module, which is connected to the control module and is instructed by the control module to execute a specific assignment; a wireless communication module, which performs communication with the server side and transfers a received external signal to the control module; a locking module, which locks, after receiving a locking instruction of the control module, the automatic working device, where after determining that an external signal of a specific type is received, the control module sends, according to a preset rule corresponding to the preset type, the locking instruction to the locking module; the server side comprises: a control module, a storage module, and a communication module, the storage module stores tenancy time information, and the control module instructs, according to the tenancy time information, the communication module to send the external signal to the automatic working device.

Preferably, the external signal of the preset type is a locking signal sent by the server side at a time that is set based on a lease expiration time, and a corresponding preset rule is: after a preset time after receiving the external signal of the preset type, the control module sends a locking instruction to the locking module.

Preferably, after determining that the received external signal is an unlocking signal sent by the server side, the control module sends an unlocking instruction to the locking module, and after receiving the unlocking instruction, the locking module unlocks the automatic working device.

Preferably, the external signal of a preset type is a tenancy signal carrying a lease expiration time, and a corresponding preset rule is that: the control module stores the lease expiration time to the storage module and sends a locking instruction to the locking module at a preset time after lease expiration.

The present invention further provides a control method of a rental-type automatic working device, where the rental-type automatic working device comprises a control module, which controls running of the automatic working device; a walking module, which is connected to the control module and is instructed by the control module to actuate the automatic working device to walk; a working module, which is connected to the control module and is instructed by the control module to execute a specific assignment; a wireless communication module, which performs communication with the server side and transfers a received external signal to the control module; and a locking module, which locks, after receiving a locking instruction of the control module, the automatic working device; and the control method comprises the following steps:
S1: Receive an external signal by using a wireless communication module and transfer it to a control module.
S2: Determine whether the external signal received by the control module is of a preset type, and if yes, perform step S3.
S3: Send, according to a preset rule corresponding to the preset type, a locking instruction to a locking module.

Preferably, the external signal of the preset type is a locking signal sent by the server side at a time that is set based on a lease expiration time, and in step S3, a corresponding preset rule is: at a preset time after receiving the external signal of the preset type, the control module sends a locking instruction to the locking module.

Preferably, the external signal of a preset type is a tenancy signal carrying lease expiration time information, and in step S3, a corresponding preset rule is that: the control module stores the lease expiration time to the storage module and sends a locking instruction to the locking module at a preset time after lease expiration.

As compared with the prior art, the present invention has the following beneficial effects: After an external signal of a server side is received, locking is performed at a preset time after a lease expires, so as to prevent a user from continuing using a tool after the lease expires; or after an external signal of a server side is received, locking is performed at a preset time after an installment payment deadline expires, so as to prevent a user from continuing using a tool without paying a full installment after the installment payment expires. Management costs of a service provider and a default risk of a user are reduced.

### BRIEF DESCRIPTION OF THE DRAWINGS

The foregoing objectives, technical solutions, and beneficial effects of the present invention can be described in detail by using the following specific embodiments that can implement the present invention.

The same numbers and signs in the accompanying drawings and description are used to represent the same or equivalent elements.
FIG. 1 is a schematic diagram of an electric tool according to an embodiment of the present invention;
FIG. 2 is a schematic diagram of a control module group of the electric tool shown in FIG. 1;
FIG. 3 is a block diagram of a system according to another embodiment of the present invention;
FIG. 4 is a schematic diagram of a system when the electric tool shown in FIG. 3 is a robotic mower;
FIG. 5 is a schematic diagram of an automatic working device rental system or installment payment system according to an implementation manner of the present invention;
FIG. 6 is a block diagram of the automatic working device rental system or installment payment system according shown in FIG. 5;
FIG. 7 is a flowchart of a working method of the automatic working device shown in FIG. 6;
FIG. 8 is a work flowchart of an automatic working device according to an implementation manner of the present invention; and
FIG. 9A and FIG. 9B are a work flowchart of an automatic working device according to another implementation manner of the present invention.

| | | |
|---|---|---|
| 100: electric tool | 10: housing | 20: motor |
| 30: transmission mechanism | 40: fixture | 50: battery |
| 60: control module group | 61: information collection unit | 62: information processing unit |
| 63: storage unit | 64: information control unit | 65: communication unit |
| 66: motor running control unit | 110: robotic mower | 111: boundary |
| 103: display unit | 151: charging station communication unit | 150: charging station |
| 200: server | 201: server communication unit | 205: maintenance warning analysis module |
| 207: maintenance warning notification module | 211: research and development reference information processing module | 213: research and development reference information output module |
| 301: automatic working device | 303: server side | 305: working area |
| 311: working module | 313: walking module | 315: locking module |
| 317: control module | 319: storage module | 321: wireless communication module |
| 331: control module | 333: storage module | 335: communication module |
| 323: energy module | | |

### DETAILED DESCRIPTION

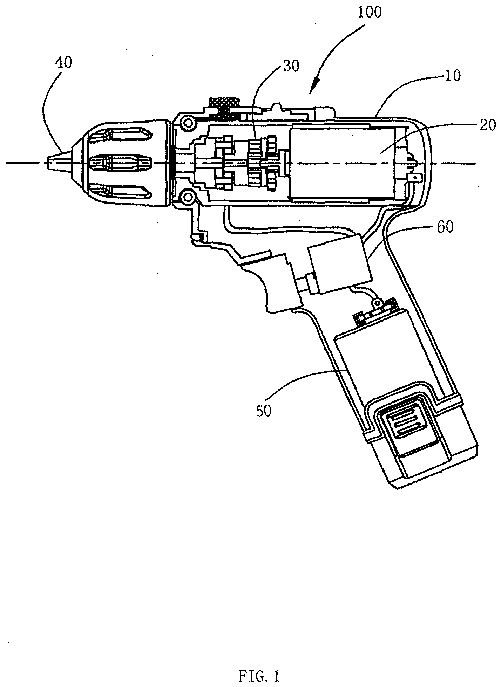

Refer to FIG. 1, an embodiment of the present invention provides an electric tool 100. The electric tool 100 is an electric drill, a screwdriver, a reciprocating saw, an electric router, or an electric hammer. In this embodiment, the electric tool is an electric drill. The electric tool 100 has a housing 10, a motor 20 disposed inside the housing 10, a transmission mechanism 30 connected to the motor 20, a fixture 40 actuated by the transmission mechanism 30, a battery 50 configured to supply power for the motor 20, and a control module group 60 configured to control the motor 20.

Herein, the battery 50 of the electric tool 100 is a rechargeable battery. In other embodiments, the electric tool 100 may also adopt a form of externally connecting to the mains, and in this case, the electric tool 100 needs to have a power supply connection wire. During use, it is only necessary to connect the power supply connection wire to the mains. The battery 50 of the electric tool 100 may be a rechargeable battery such as a lead storage battery, a nickel-hydrogen battery, a nickel-cadmium battery, or a lithium-ion battery.

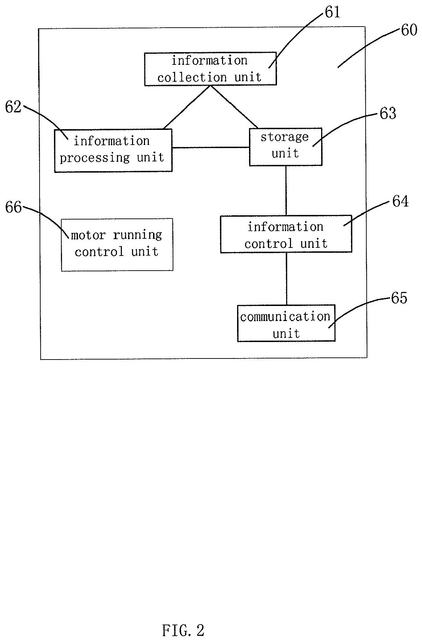

Refer to FIG. 2, the electric tool 100 further comprises an information collection unit 61 configured to collect running data of the electric tool 100, an information processing unit 62 configured to analyze and process the data collected by the information collection unit 61 to determine a fault type, a storage unit 63 that stores a processing result of the information processing unit 62, a communication control unit 64 that controls whether to exchange information with an external device, and a communication unit 65 that performs information transmission to the external device. In this embodiment, the information collection unit 61, the information processing unit 62, the storage unit 63, the communication control unit 64, and the communication unit 65 are integrated in the control module group 60. That is, in addition to comprising a motor running control unit 66 that controls running of the motor, the control module group 60 further comprises the information collection unit 61, the information processing unit 62, the storage unit 63, the communication control unit 64, and the communication unit 65. The control module group 60 may include a circuit board, where in addition to the control unit 66, the information collection unit 61, the information processing unit 62, the storage unit 63, the communication control unit 64, and the communication unit 65 are disposed on the circuit board.

The information collection unit 61 may include a tachometer that monitors an running speed of the motor 20, a current collection circuit and a voltage collection circuit that detect a current and a voltage on the motor 20, a current collection circuit and a voltage collection circuit that detect currents and voltages on two ends of the battery 50, and a timer that detects a running time of the motor 20 and a use time of the battery 50. In this way, the running data of the electric tool 100 collected by the information collection unit 61 comprises a rotation speed of motor 20, a working current of the motor 20, voltages on two ends of the motor 20, a running time of the motor 20, an output voltage of the battery 50, an output current of the battery 50, and a use time of the battery 50. The running data is stored in the storage unit 63. The information processing unit 62 analyzes and processes the data, so as to determine whether a fault occurs in the electric tool 100 and a type of the fault that occurs, thereby helping maintain the electric tool 100. A result of analyzing, by the information processing unit 62, the fault of the electric tool 100 is stored in the storage unit 63. When the faulty electric tool 100 needs to be maintained, the information stored in the storage unit 63 may be read.

The information processing unit 62 of the electric tool 100 is a microcomputer. The communication unit 65 of the electric tool 100 performs data transmission to the external device in a Bluetooth transmission manner, a WiFi transmission manner, a data cable transmission manner, or a mobile communication transmission manner. In this embodiment, the communication unit 65 of the electric tool 100 performs data transmission to the external device in a data cable transmission manner. The communication unit 65 of the electric tool 100 is a Universal Serial Bus (USB) interface. When data transmission to the external device is needed, it is only needed to connect a USB interface of the electric tool 100 to a corresponding USB interface of the external device by using the data cable.

A working process of the electric tool 100 when a fault occurs is described in detail below.

When the electric tool 100 is working, the information collection unit 61 collects, in real time, information, such as comprises a rotation speed of motor 20, a working current of the motor 20, voltages on two ends of the motor 20, a running time of the motor 20, an output voltage of the battery 50, an output current of the battery 50, and a use time of the battery 50, and stores the collected information into the storage unit 63. Moreover, when the electric tool 100 works, some fault may occur because of aging of an individual piece or an improper operation, resulting in that the electric tool 100 cannot work normally. In this way, the information collection unit 61 collects information when the fault occurs and stores it into the storage unit 63. In addition, the information processing unit 62 analyzes and processes the information collected by the information collection unit 61 to determine a fault type. For example, an output voltage of the battery 50 and an output current of the battery 50 before the fault are compared with a standard output voltage of the battery 50 and a standard output current of the battery 50, so as to determine whether the battery 50 needs to be charged, that the battery 50 is faulty and needs to be replaced, or the like. Moreover, information, such as the standard output voltage of the battery 50 and the standard output current of the battery 50, may be stored in the storage unit 63 before delivery. After performing analysis and processing according to the information collected by the information collection unit 60 to obtain a fault type, the information processing unit 62 stores the fault type in the storage unit 63. In this way, the electric tool 100 can implement diagnosis and storage of the fault.

When the faulty electric tool 100 needs to be maintained, it is needed to implement information exchange between the external device and the electric tool. That is, a communications part of the external device cooperates with the communication unit 65 of the electric tool 100 to implement communication. The external device may be an electronic device such as a mobile phone, a computer, or a fault diagnosis instrument. After the external device and the electric tool 100 implement a communication connection, the communication control unit 64 controls the communication unit 65 to perform data transmission. Data stored in the storage unit 63 of the electric tool 100 is transferred to the external device by using the communication unit 65. In the case, the transferred data comprises data collected by the information collection unit 61 and data obtained by the information processing unit after it analyzes and processes the data collected by the information collection unit 61. After obtaining the data, the external device displays the data on a display screen of the external device, so that maintenance personnel can known a type and reason of the fault, thereby implementing that the maintenance personnel maintain the electric tool 100 according to the type and reason of the fault.

From the foregoing fault diagnosis process of the electric tool 100, it could be known that in a process of diagnosing the fault of the electric tool 100, it is only needed to perform a communication connection between the electric tool 100 and the external device, which can be carried out by a common user. Therefore, professional personnel are not needed to dismantle the electric tool and perform tests and analysis to determine a fault type, a fault reason, or the like. Such a diagnosing method is relatively simple. In addition, because a relatively great amount of relatively comprehensive information is collected by the information collection unit 61, when analyzing and processing the information collected by the information collection unit 61, the information processing unit 62 can obtain a relatively great amount of relatively comprehensive fault information, so as to facilitate diagnosing and analyzing a relatively complex fault. Therefore, the electric tool has an advantage of preferably diagnosing a fault thereof.

The information processing unit of the electric tool analyzes and processes the information collected by the information collection unit to obtain fault information and stores the fault information in the storage unit. When fault diagnosis is performed, the external device only needs to perform communication with the electric tool by using the communication unit, so as to read the fault information stored in the storage unit. In this way, the electric tool can implement diagnosis of the fault. Because the information collection unit can collect multiple types of information, so as to help the information processing unit perform analysis and processing, so that more types of fault information can be identified. The electric tool has an advantage of preferably diagnosing a fault thereof.

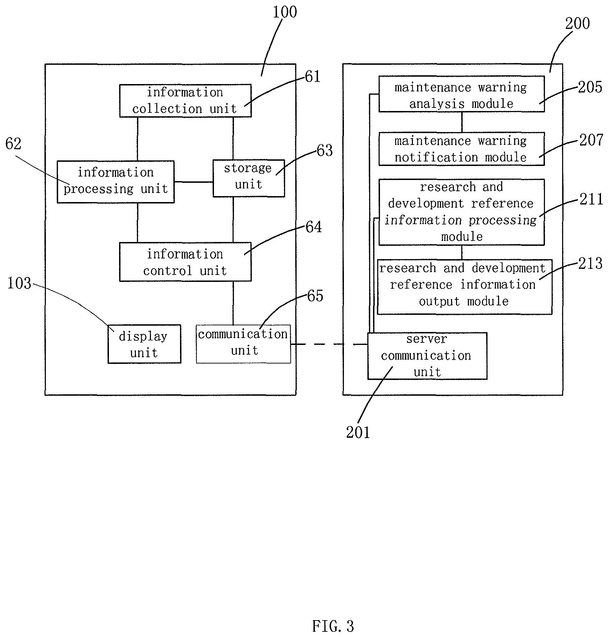

Refer to FIG. 3 to FIG. 5, another embodiment of the present invention provides an electric tool remote information collection system.

As shown in FIG. 3, the electric tool remote information collection system comprises an electric tool and an electric tool remote information collection apparatus, where the electric tool remote information collection apparatus comprises a server 200 and another necessary peripheral device. Communication can be performed between the electric tool and the server 200, and the electric tool sends the information collected by itself to the server 200. The electric tool may be a conventional tool or an intelligent tool. In this embodiment, the electric tool is specifically a robotic gardening tool, and more specifically, is a robotic mower 110.

Similar to the preceding embodiment, from a perspective of structure, the electric tool comprises components such as a housing, a motor located inside the housing, a working assembly driven by the motor to execute specific work, a battery that provides working energy for the electric tool, and a control module group that controls working of the electric tool. From a perspective of electric control, the electric tool specifically further comprises components such as an information collection unit 61, an information processing unit 62, a storage unit 63, and a communication unit 65.

The information collection unit 61 collects maintenance warning information and research and development reference information.

The maintenance warning information is information related to whether the electric tool needs maintenance. The maintenance warning information may be component status information of some crucial or vulnerable component, for example, at least one of a motor total running time length, a brush wear status, a blade total working time length, a blade wear status, a battery cycle, a battery full voltage, and the like. Correspondingly, the information collection unit 61 comprises at least one of a timer that motors a total running time length, a brush status detector that detects a brush wear status, a timer that monitors a blade total working time length, a blade status detector that detects a blade wear status, a battery monitoring circuit that detects a battery cycle, and a voltage detection circuit that detects a battery full voltage. That is, the electric tool does not need to detect all foregoing pieces of maintenance warning information, but only needs to selectively detect at least one type of the information according to a specific type of the electric tool and deploy a corresponding detection structure. For example, some electric tools do not have a brush, a blade, or a battery, and then, it is natural that corresponding information does not need to be monitored; and blades of some electric tools are not easy to wear, but their batteries can be easily depleted, and then, correspondingly, blade status information may be not detected, and detection on a battery cycle and a battery full voltage is focused.

The maintenance warning information may also be other information, for example, at least one of internal humidity information or cyclic complete inspection information. Correspondingly, the information collection unit comprises at least one of a humidity sensor that detects internal humidity or a prompt circuit that periodically sends a complete inspection prompt signal.

The research and development information provides information for reference by subsequent research and development of the electric tool. The research and development reference information may be environment information of an environment in which the electric tool works, for example, at least one of humidity information, temperature information, and the like, and with regard to a tool that is used outdoor such as a gardening tool, may also include at least one of temperature difference information, illumination information, lawn area information, grass status information, and the like. The temperature difference information is usually a temperature difference in one day, but may also be a monthly, quarterly, or yearly temperature difference; the illumination information comprises one or more of illumination time length information, illumination intensity information, and ultraviolet ray intensity information; the lawn area information indicates area information of a lawn on which a robotic gardening tool, for example, a robotic mower works; and the grass status information is one or more of lawn density information, lawn height information, or grass type information. Accordingly, the information collection unit 61 comprises a temperature sensor that detects temperature information and temperature difference information, a humidity sensor that detects humidity information, and a light sensor that detects illumination information (specifically, for example, a light ray sensor, a light intensity detector, and an ultraviolet ray intensity detector), an area detection module that detects a lawn area, a grass status sensor that detects a grass status, and the like. It should be pointed out that the area detection module may be constituted by a preset program built in a control assembly and a relevant component, for example, the area the detection module comprises an area detection program, a GPS element, and a boundary sensor, the area detection module uses the area detection program to control, according to boundary position information fed back by the boundary sensor, the robotic gardening tool to walk along the boundary of the lawn, records GPS positioning information of a walking track, and after a round of walking, performs calculation according to a shape formed by the track to obtain a lawn area.

The environment information helps to determine quality requirements for the electric tool. According to the environment information, an electric tool manufacturer may individually regulate directed quality standards for electric tools used in different environment, so as to correspondingly select the most proper design scheme or component. For example, if an electric tool usually works in an environment with relatively high humidity, in the subsequent research and development, the design may be improved by adding a damp-proof structure or selecting a seal member with better performance. If a temperature in a working environment of an electric tool is relatively high or relatively low, a component whose high temperature-resistant performance or low temperature-resistant performance satisfies requirements better is selected accordingly in the subsequent research and development. If ultraviolet ray intensity in a working environment of an electric tool is relatively high, a component having stronger ultraviolet ray-resistant performance is selected accordingly in the subsequent research and development. Details are not described again.

The environment information also helps to determine functions or design requirements of an electric tool. For example, if the area of a lawn where a robotic mower works is relative large, with respect to this working environment, in the subsequent research and development, a cutting capability of the robotic mower may be enhanced, for example, increasing a capacity of a battery pack to provide a longer single-pack working time, increasing a walking speed and cutting output power to increase a cutting speed, and the like.

The research and development reference information may further be usage mode information, where the usage mode information indicates a mode in which a user uses a tool, for example, a usage frequency, a working time length, a working time segment, a working plan, a working current, a motor rotation speed, and the like. The usage frequency indicates a number of working times within a period of time. The working time length indicates a time length during which a single time of work lasts. The working time segment indicates time segments in a specific period in which a tool works, for example, which hours in one day in which the tool works, which days in one week in which the tool works, which months in one year in which the took works, and the like. The working plan indicates a working plan set by a user for an intelligent device. The working plan may only be a time plan, that is, when to start working and when to sleep or get charged. For example, a typical time plan is that a robotic mower works from 8:00 to 17:00 from Monday to Friday every work and does not on Saturday and Sunday. The working plan may also include a time plan and a task plan. The task plan indicates a type of an executed task, for example, work at a high rotation speed or a low rotation speed, walk in a random path mode or a spiral path mode, work in a first area or a second area, and the like, which are not exemplified one by one. For example, a robotic mower works from 8:00 to 17:00 from Monday to Friday at the front yard and works at the back yard in the rest time, or works from 8:00 to 17:00 on Saturday and Sunday at the front yard and does not work in the rest time. The working current and motor rotation speed have their conventional meanings, and are not further described in detail.

The information collection unit 61 comprises a corresponding structure or module to collect the foregoing information, for example, information, such as the usage frequency, the working time length, the working time segment, and the working plan, may all be collected by using a corresponding a log program built in the control module group; the working current may be collected by using a current detection circuit; and the motor rotation speed may be collected by using a tachometer.

The usage mode information helps to collect subsequent research and development requirements. For example, research and development personnel may learn, according to a working plan set by a user, specific use requirements of the user, to provide for a specific user a built-in program needed by the user. The research and development personnel may also learn, according to a working current, a motor rotation speed, and the like of an electric tool, a working status that a user usually faces, so as to specifically design a product.

The information processing unit 62 processes, according to a preset procedure, the original maintenance warning information and research and development reference information collected by the information collection unit 61, so as to form information suitable for being sent to the server 200, where after being stored in the storage unit 63, the information is sent to the server 200 by the communication unit 65 when necessary; or after the processing, the information is directly sent to the server 200 by using the communication unit 65.

The communication unit 65 performs communication with the external server 200 and sends the maintenance warning information and research and development reference information processed by the information processing unit 62 to the external server 200.

The electric tool may also include a display unit 103, to display maintenance type information sent by the server 200. The maintenance type information indicates a type of maintenance that the electric tool needs to perform, for example, replacing a battery or replacing a blade. Specifically, the communication unit 65 of the electric tool receives maintenance type information from the server communication unit 201 of the server 200, and subsequently, after the control module group 60 processes the received information, the information is displayed on the display unit 103.

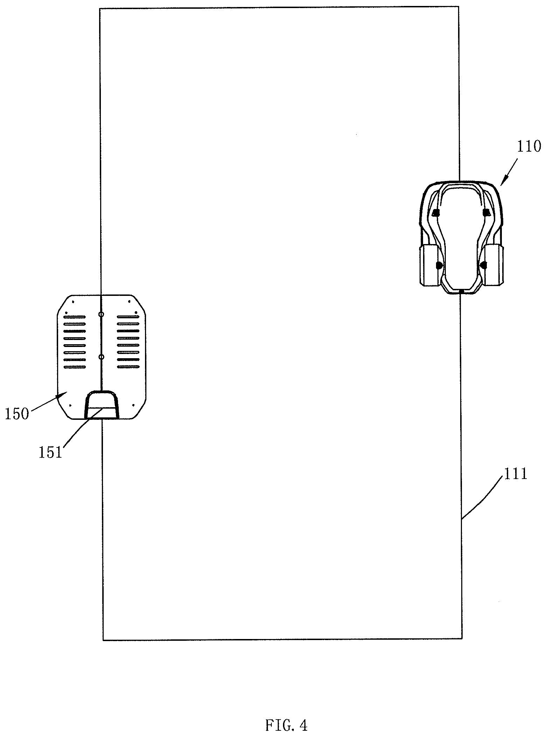

As shown in FIG. 4, the electric tool is a robotic gardening tool, and specifically, is a robotic mower 110. As shown in the drawing, the robotic mower 110 automatically moves and works in a boundary 111. In addition to the foregoing conventional structure of an electric tool, the robotic mower 110 further comprises a charging electrode, a drive assembly, and the like, and the working assembly is specifically a cutting assembly. The robotic mower 110 can be docked with a charging station 150 to get charged. The charging station 150 is provided with a charging station communication unit 151, and the communication unit 65 of the robotic mower 110 performs communication with the server 200 by using the charging station communication unit 151. For example, the communication unit 65 of the robotic mower 110 performs communication with the charging station communication unit 151 by using wireless signals such as the WiFi, Bluetooth, or radio frequency wireless signals, and the charging station is connected to the Internet and performs communication with the server communication unit 201 of the server 200 through the Internet. For another example, the communication unit of the robotic mower 110 has a physical communications interface, when the robotic mower 110 stops at the charging station 150 to get charged, the physical communications interface is docked with a corresponding physical communications interface of the charging station to transfer information; and the charging station communication unit 151 is further connected to the Internet in a wireless or wired manner and performs communication with the server 200 through the Internet. The physical communications interface of the robotic mower 110 is integrated on a charging electrode, that is, the charging electrode simultaneously transfer energy and signals.

The electric tool part of this embodiment is described in detail above, and the electric tool remote information collection apparatus part of this embodiment is described in detail below.

The electric tool remote information collection apparatus comprises a server 200 and other necessary peripheral device. The server 200 comprises a server communication unit 201 and a control module group, where the control module group specifically comprises a maintenance warning analysis module 205, a maintenance warning notification module 207, a research and development reference information processing module 211, and a research and development reference information output module 213.

The server communication unit 201 performs communication with the communication unit 65 of the electric tool to collect the maintenance warning information and research and development reference information. As stated above, the maintenance warning information indicates whether the electric tool needs maintenance, and the research and development reference information provides information related to subsequent research and development of the electric tool.

The maintenance warning analysis module 205 analyzes, according to a preset procedure, the received maintenance warning information to obtain maintenance type information. The maintenance type information indicates a type of maintenance that the electric tool needs to perform, for example, replacing a brush, replacing a blade, replacing a battery, or replacing a motor. Specifically, the maintenance warning analysis module 205 is provided with a built-in determining unit corresponding to maintenance type, for example, a brush replacement determining unit, a blade replacement determining unit, or a battery replacement determining unit. After receiving the maintenance warning information, the maintenance warning analysis module 205 inputs the information into a determining unit, the determining unit determines whether the information satisfies a preset condition, and if yes, determines that it is needed to execute maintenance of a corresponding type, so as to output maintenance type information. For example, the maintenance warning analysis module 205 has a motor replacement determining unit, where a determining condition thereof is that a motor total working time length is greater than 100 hours, and then, if the maintenance warning information indicates that the motor total running time length is 101 hours, the motor replacement determining unit determines that the motor needs to be replaced and outputs motor replacement information. For another example, the maintenance warning analysis module 205 has a blade replacement determining unit, where a determining condition thereof is that the blade total working time length is greater than 500 hours or a wear degree of the blade is greater than 20%, if the maintenance warning information indicates that the blade total working time length is 300 hours but the wear degree of the blade is 25%, the blade replacement determining unit determines that the blade needs to be replaced and outputs blade replacement information.

After receiving the maintenance type information, the maintenance warning notification module 207 sends an instruction that notifies a user of a maintenance type of maintenance that the electric tool needs. The instruction may be a maintenance prompt notification directly sent to a user or a notification sent to a manufacturer, a dealer, or an after-sales service provider. For example, in an implementation manner, the maintenance warning notification module 207 notifies a user of a maintenance type of maintenance that the electric tool needs by using an e-mail, an SMS, network communications software, or social network information; in another embodiment, the maintenance warning notification module 207 sends the maintenance type information to the electric tool, and after receiving the information, the electric tool displays the information on the foregoing display unit 103; and in another embodiment, the maintenance warning notification module 207 sends a maintenance type and user information to an after-sales service provider, and the after-sales service provider directly contacts a user by telephone or face to face to prompt the user that his or her electric tool needs motor maintenance such as replacing a motor or replacing a battery.

As stated above, the maintenance warning information comprises component status information, and the component status information comprises at least one of a motor total running time length, a brush wear status, a blade total working time length, a blade wear status, a battery cycle, and a battery full voltage; and the maintenance type comprises at least one of replacing a motor, replacing a brush, replacing a blade, and replacing a battery.

The research and development reference information processing module 211 processes, according to the preset procedure, the received research and development reference information; and the research and development reference information output module 213 outputs the processed research and development reference information. Specifically, after performing work, such as sorting, classification, data statistics, on the research and development reference information according to preset rules, the research and development reference information processing module 211 outputs the information to the research and development reference information output module 213, and the research and development reference information output module 213 outputs the processed information in a proper form for reference by research and development personnel in the subsequent research and development.

For example, the research and development reference information processing module 211 classifies and summarizes data of multiple users according to a district or an information type to obtain specific data such as average ultraviolet ray data in summary in the Hainan district, average lawn area data in North Europe, and a distribution status of each lawn area in each section. The research and development reference information output module 213 outputs the information in a form of a drawing or a table for reference by research and development personnel.

As stated above, the research and development reference information comprises environment information, and the environment information comprises at least one of grass status information, humidity information, temperature information, temperature difference information, illumination information, and lawn area information. The research and development reference information comprises usage mode information, and the usage mode information comprises at least one of a usage frequency, a working time length, a working time segment, a working plan, a working current, and a motor rotation speed.

An electric tool remote information collection system in an embodiment of the present invention is described in detail above, and however, it should be understood that the embodiment may have multiple variant forms. For example, the information collection unit of the electric tool may only collect maintenance warning information or research and development reference information instead of collecting both of them, and in such an implementation manner, accordingly, the information processing unit and communication unit also only process one type of the maintenance warning information or research and development reference information; and the server also accordingly only has a maintenance warning analysis module and a maintenance warning notification module, or a research and development reference information processing module and a research and development reference information output module. The other adjustments are similar and are not further described in detail.

The present invention further provides an electric tool remote information collection method applied to the foregoing electric tool remote information collection system.

The electric tool remote information collection method comprises the following steps:
(1) Collect maintenance warning information and/or research and development reference information, where the maintenance warning information provides information related to whether the electric tool needs maintenance, and the research and development information provides information related to subsequent research and development of the electric tool.

In step (1), the maintenance warning information comprises component status information, and the component status information comprises at least one of a motor total running time length, a brush wear status, a blade total working time length, a blade wear status, a battery cycle, and a battery full voltage.
(2) Process the maintenance warning information and/or research and development reference information according to a preset procedure.
(3) Send the maintenance warning information and/or research and development reference information sent by the information processing unit to the server.

Further, the method also comprises the following steps:
(4) Analyze, according to the preset procedure, the maintenance warning information to obtain maintenance type information, where the maintenance type information indicates a type of maintenance that the electric tool needs to perform.

In step (4), the maintenance type comprises at least one of replacing a motor, replacing a brush, replacing a blade, and replacing a battery.
(5) Send an instruction that notifies a user of a maintenance type of maintenance that the electric tool needs.

In step (5), the user is notified of the maintenance type of maintenance that the electric tool needs by using an e-mail, an SMS, network communications software, or social network information.

Further, the method also comprises the following steps:
(6) Process, according to the preset procedure, the research and development reference information received by the server.

In step (6), the research and development reference information comprises environment information, and the environment information comprises at least one of grass status information, humidity information, temperature information, temperature difference information, illumination information, and lawn area information.

In step (6), the research and development reference information comprises usage mode information, and the usage mode information comprises at least one of a usage frequency, a working time length, a working time segment, a working plan, a working current, and a motor rotation speed.
(7) Output the research and development reference information processed.

Specific implementation manners of a electric tool and a rental system and an installment payment system thereof involved in the present invention are described below.

The remotely lockable electric tool involved in the following specific implementation manners is not limited to a specific type of electric tool, but may include multiple types of electric tools, for example, an automatic working device, an electric tool, a fuel tool, and a pneumatic tool. The electric tool may serve as a rental-type electric tool, applied to a rental-type electric tool system, where the electric tool is rented to a user; or the electric tool may also serve as an installment payment-type electric tool, applied to an installment payment-type electric tool system, where electric tool is sold to a user in an installment payment form.

The electric tools involved in the specific implementation manners all include: a control module configured to control running of the electric tool; a working module, connected to the control module, where the working module can be instructed by the control module to execute a specific assignment, for example, automatically cutting grass, hammering, drilling a hole, or driving a screw; a wireless communication module, configure to perform communication with a server side, where the wireless communication module transfer a received external signal to the control module; and a locking module, which forbids, after receiving a locking instruction of the control module, the working module from working.

A remotely locking process of the electric tool specifically comprises that: after determining that an external signal of a specific type is received, the control module of the electric tool sends, according to a preset rule corresponding to the preset type, a corresponding instruction to the locking module. The external signal of the preset type may be a locking signal sent by a server side, and a corresponding preset rule is that: after a preset time after receiving the locking signal, the control module sends a locking instruction to the locking module, and after receiving the locking instruction, the locking module forbids the working module from working. The external signal of the preset type may also be an unlocking signal sent by the server side, and a corresponding preset rule is that: after determining that the received external signal is an unlocking signal sent by the server end, the control module sends an unlocking instruction to the locking module, and after receiving the unlocking instruction, the locking module unlocks the electric tool.

The remotely lockable electric tool may be specifically applied as a rental-type electric tool or an installment payment-type electric tool. The specific electric tool and the control method and system are described in detail in the present invention by using an automatic working device as an example. With regard to other electric tools, fuel tools, and pneumatic tools, it is only needed to adaptively change the working module, control module, and the like in the automatic working device, and their specific rental and installment payment working modes and control processes are still similar.

An automatic working device that can be remotely locked and unlocked and its application in a rental mode or an installment payment mode are described in detail by using an automatic working device as an example.

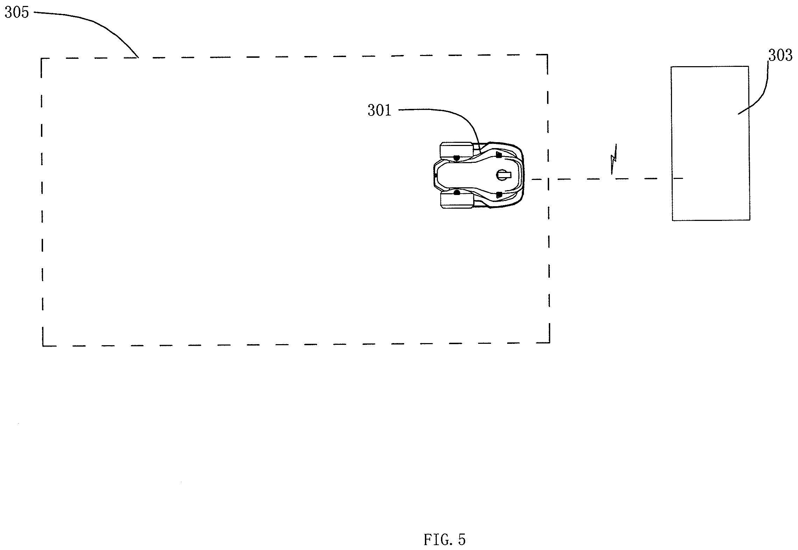

As shown in FIG. 5, the electric tool is specifically an automatic working device in this embodiment, and FIG. 5 is a schematic diagram of an automatic working device rental system or installment payment system. The automatic working device rental system or installment payment system comprises an automatic working device 301 and a server side 303, where the automatic working device 301 automatically walks and works in a working area 305. The automatic working device 301 may specifically be an intelligent mower, an intelligent vacuum cleaner, or the like, and the working area 305 is accordingly a lawn, a floor, or the like.

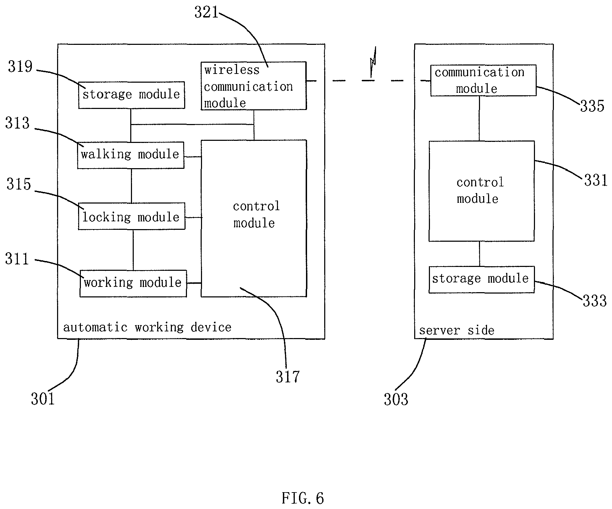

As shown in FIG. 6, the electric tool is specifically an automatic working device in this embodiment, and FIG. 6 is a block diagram of an automatic working device rental system or installment payment system. The automatic working device 301 mainly comprises a working module 311, a walking module 313, a locking module 315, a control module 317, a storage module 319, a wireless communication module 321, and an energy module 323. The server side 303 mainly comprises a control module 331, a storage module 333 and a communication module 335.

The control module 317 controls cooperative running of respective modules of the automatic working device 301. The working module 311 is connected to the control module 317 and is instructed by the control module 317 to execute a preset assignment, and according to that a device type is a mower or a cleaner, the working module 17 may be a cutting module that cuts a lawn, a cleaning module that cleans the ground, or the like. The walking module 313 is connected to the control module 317 and is instructed by the control module 317 to actuate the automatic working device 301 to walk, and the walking module 313 usually comprises a driving motor, a driving wheel, and the like.

The locking module 315 is connected to the control module 317 and is instructed by the control module 317 to lock and unlock the automatic working device 301. When the automatic working device 301 is locked, a locked scope may only be the working module 311, that is, only the working module 311 is forbidden to work, but other modules all normally run, and the automatic working device 301 still can execute instructions such as a walking instruction; the locked scope may also be most main modules comprising the walking module 313 and the working module 311, and the automatic working device 301 mainly maintains running of the minimized system, for example, the automatic working device 301 keeps a standby state and cannot walk or work, but can perform communication with the outside and feed back content, such as that the machine has been locked and a fee needs to be paid, when a user enters an instruction.

The type of the locking module 315 may be electronic or mechanical, and if the locking module 315 is electronic, the locking module 315 may be an electronically controlled device and after receiving an instruction of the control module 317, switches off a relevant module such as the walking module 313 and the working module 311; and an independent physical entity module may also not be needed, and control of the control module 317 is used to implement locking, that is, the control module 317 stops working of an instruction related module such as the walking module 313 and the working module 311. If the locking module 315 is of a mechanical type, the locking module 315 may include an independent lock to lock the working module 311 or walking module 313 after receiving the locking instruction to forbid an action, so that the working module 311 or walking module 313 cannot continue running, and unlock the working module 311 or walking module 313 after receiving an unlocking instruction. The storage module 319 is connected to the control module 317 and is configured to store various relevant information such as a machine sequence code, a lease starting time, a lease expiration time, tenant information (an address, a telephone number, a name, an e-mail address, and the like), fee payment information, an installment agreement expiration time of installment payment, balance information of installment payment, and loan user information (an address, a telephone number, a name, an e-mail address, and the like). The wireless communication module 321 is connected to the control module 317 and is configured to perform communication with the server side 303, receive an external signal sent by the server side 303, and transfer the external signal to the control module 317. The wireless communication module 321 may be a WiFi module or a cellular communication module, may also be another suitable module. The energy module 323 provides energy required by working for each of the foregoing modules and may usually be a rechargeable battery pack.

The server side 303 manages multiple automatic working devices 301. The storage module 333 of the server side 303 stores various relevant information of the rental system, for example, a machine sequence code of each automatic working device 301 managed by the server side 303, a corresponding rental state (rented or idle) of each automatic working device 301, a lease starting time, a lease expiration time, tenant information (an address, a telephone number, a name, an e-mail address, and the like), fee payment information, a use time, and the like; or the storage module 333 stores various relevant information of the installment payment system, for example, a machine sequence code of each automatic working device 301 managed by the server side 303, a corresponding installment payment state (the nth payment of the installment payment or idle) of each automatic working device 301, a starting time of the current installment of the installment payment, an expiration time of the current installment of the installment payment, loan user information (an address, a telephone number, a name, an e-mail address, and the like), fee payment information, and a use time. The control module 331 sends, according to the information stored in the storage module 333, various instructions to the communication module 335 according to the preset procedure. The communication module 335 can directly or indirectly send the instruction as the foregoing external signal to the automatic working device 301. The communication module 335 does not need to be wireless and can send the external signal to the target automatic working device 301 by means of different types of transferring devices/services.

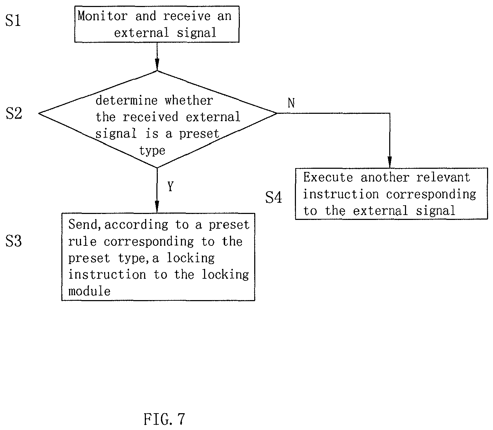

Refer to FIG. 7, in this embodiment, the electric tool is specifically an automatic working device. The server side 303 sends an external signal to the automatic working device 301, after receiving the external signal, the wireless communication module 321 transfers it to the control module 317, after determining that the received external signal is of a preset type, the control module 317 sends, according to a preset rule corresponding to the preset type, a locking instruction to the locking module 315, and after receiving the locking instruction, the locking module 315 locks the automatic working device 301. Because the external signal of the preset type is associated with a lease time, the foregoing manner implement locking the automatic working device 301 after lease expiration; or because the external signal of the preset type is associated with a installment payment expiration time and an amount, the foregoing manner implement locking an automatic device 1 after installment payment expiration or permanently unlocking the automatic working device 301 when the balance is 0. According to different specific implementation manners, the external signals of preset types are also different, and preset rules corresponding to the preset types are also different. The rental-type automatic working device and installment-type automatic working device are separately used to describe the two specific implementation manners below.

In a first implementation manner, the storage module 319 of the automatic working device 301 may not store lease time information, a lease time and a locking occasion are controlled by the server side 303, the server side 303 sends a locking signal at a time that is set based on a lease expiration time, and after a preset time after receiving the locking signal, the automatic working device 301 is locked. That is, in this implementation manner, the external signal of the preset type is a locking signal sent by the server side 303 at a time that is set based on the lease expiration time, the set time may specifically be a time that is set when the lease expires or before or after the lease expiration time for sending the locking signal; and a set time before a lease expiration time may be three days before the lease expires and the like. A corresponding preset rule is that after a preset time after receiving the locking signal, the control module 317 sends a locking instruction to the locking module 315.

If the server side 303 sends a locking signal to the automatic working device 301 at a set time before the lease expires, after the foregoing preset time, a preset time in the automatic working device 301 needs to be long enough to prevent the automatic working device 301 from being locked before the lease expires. For example, if a locking signal is sent by the server side 303 three days before the lease expiration time, the preset time must be longer than or equal to three days.

Accordingly, after the user pays a renewal, the server side 303 updates the lease expiration time in the storage module 333 and sends an unlocking signal to the automatic working device 301, and after the automatic working device 301 receives an external signal whose type is an unlocking signal, the control module 317 sends an unlocking instruction to the locking module 315, and the locking module 315 unlocks the automatic working device 301.

The foregoing preset time may also be 0, that is, after the external signal is received, locking is immediately performed; the foregoing preset time may also be a suitable grace period segment, such as three days or one week, for a user to pay a fee within the time segment, and if the preset time is a grace period segment, the automatic working device 301 may send a piece of lease expiration prompt information after receiving the external signal to prompt the user to pay the fee or unsubscribe the service. Further, preferably, the server side 303 may send a prompt signal to the automatic working device 301 at a period of time, such as one week, before the lease expires, and after receiving the external signal of this type, the automatic working device 301 sends a piece of prompt information to the user to prompt the user that the lease is about to expire and the user may return the automatic working device 301 or pay a renewal, and the prompt information may also include a prompt to prompt the user how to pay the renewal and like. The information may be sound, image, or text information and may specifically be set according to actual requirements and an interactive interface of the automatic working device 301.

In a first implementation manner of the installment-type automatic working device, the storage module 319 of the automatic working device 301 may not store installment agreement time information of the installment payment or balance information, an installment agreement time and a locking occasion are controlled by the server side 303, the server side 303 sends a locking signal at a time that is set based on an installment agreement expiration time, and after a preset time after receiving the locking signal, the automatic working device 301 is locked. That is, in this implementation manner, the external signal of the preset type is a locking signal sent by the server side 303 at a time that is set based on the installment agreement expiration time, the set time may specifically be a time that is set when the installment agreement expires or before or after the installment agreement expiration time for sending the locking signal; and a set time before an installment agreement expiration time may be three days before the installment agreement expires and the like. A corresponding preset rule is that after a preset time after receiving the locking signal, the control module 317 sends a locking instruction to the locking module 315. After the user performs installment agreement payment, an update is made when the installment agreement expires, and the balance information is also updated accordingly; and when the balance information is displayed to be 0, the server side 303 sends a permanent automatic unlocking instruction to the working device 301.

If the server side 303 sends a locking signal to the automatic working device 301 at a time that is set before the installment agreement expires, after the foregoing preset time, a preset time in the automatic working device 301 needs to be long enough to prevent the automatic working device 301 from being locked before the installment agreement expires. For example, if a locking signal is sent by the server side 303 three days before the installment agreement expiration time, the preset time must be longer than or equal to three days.

Accordingly, after the user pays an installment, the server side 303 updates the installment agreement expiration time and corresponding information of the to-be-paid balance in the storage module 333 and sends an unlocking signal to the automatic working device 301, and after the automatic working device 301 receives an external signal whose type is an unlocking signal, the control module 317 sends an unlocking instruction to the locking module 315, and the locking module 315 unlocks the automatic working device 301.

The foregoing preset time may also be 0, that is, after the external signal is received, locking is immediately performed; the foregoing preset time may also be a suitable grace period segment, such as three days or one week, for a user to pay an installment within the time segment, and if the preset time is a grace period segment, the automatic working device 301 may send a piece of installment agreement expiration prompt information after receiving the external signal to prompt the user to pay the installment. Further, preferably, the server side 303 may send a prompt signal to the automatic working device 301 at a period of time, such as one week, before the installment agreement expires, and after receiving the external signal of this type, the automatic working device 301 sends a piece of prompt information to the user to prompt the user that the installment agreement is about to expire and the user may pay an installment within a specified time, and the prompt information may also include a prompt to prompt the user how to pay the installment and like. The information may be sound, image, or text information and may specifically be set according to actual requirements and an interactive interface of the automatic working device 301.

In a second implementation manner, the storage module 319 of the automatic working device 301 stores lease time information, and a locking time is set according to the lease time information, so that control module 317 sends a locking instruction to the locking module 315 at a preset time after lease expiration. A function of the external signal sent by the server side 303 is updating lease time information in the storage module 319 in time. For example, after the user pays a renewal, a new lease expiration time is synchronized to the automatic working device 301. In this implementation manner, the external signal of the preset type is a tenancy signal carrying lease time information sent by the server side 303. A corresponding preset rule is that: after receiving the tenancy signal, the control module 317 stores the lease expiration time to the storage module 319 and sends a locking instruction to the locking module at a preset time after lease expiration. After the automatic working device 301 is locked, if the user pays a renewal, the server side 303 sends an updated tenancy signal to the automatic working device 301, after receiving the new tenancy signal, the control module 317 updates the lease expiration time, and in this case, if the new lease expiration time is later than the current time, sends an unlocking instruction to the locking module 315, and after receiving the unlocking instruction of the control module 317, the locking module 315 unlocks the automatic working device 301.

The foregoing preset time may also be 0, that is, locking is immediately performed after the lease expires; the foregoing preset time may also be a suitable grace period segment, such as three days or one week, for a user to pay a fee within the time segment. In such an implementation manner, the automatic working device 301 may send a prompt signal to the user at a preset time, such as one week, before the lease expires or when the lease expires to prompt the user that the lease is about to expire and the user may return the automatic working device 301 or pay a renewal, and the prompt signal may also include a prompt to prompt the user how to pay the renewal and like. The remainder information may be sound, image, or text information and may be set according to an interactive interface of the automatic working device 301.

Correspondingly, in a second implementation manner of the installment payment-type automatic working device, the storage module 319 of the automatic working device 301 stores installment agreement time information of the installment payment and information of the to-be-paid balance, and a locking time is set according to the installment agreement time information, so that control module 317 sends a locking instruction to the locking module 315 at a preset time after installment agreement expiration. A function of the external signal sent by the server side 303 is updating installment agreement time information and the balance information in the storage module 319 in time. For example, after the user pays an installment, a new installment agreement expiration time is synchronized to the automatic working device 301 and a corresponding balance is deducted. In this implementation manner, the external signal of the preset type is an installment agreement signal carrying installment payment time information sent by the server side 303. A corresponding preset rule is that: after receiving the installment agreement signal, the control module 317 stores the installment agreement expiration time to the storage module 319 and sends a locking instruction to the locking module at a preset time after installment agreement expiration. After the automatic working device 301 is locked, if the user pays an installment, the server side 303 sends an updated installment agreement signal to the automatic working device 301, after receiving the new installment agreement signal, the control module 317 updates the installment agreement expiration time, and in this case, if the new installment agreement expiration time is later than the current time, sends an unlocking instruction to the locking module 315, and after receiving the unlocking instruction of the control module 317, the locking module 315 unlocks the automatic working device 301. At this time, if the balance information is displayed as 0, a permanent unlocking instruction is sent to the locking module 315, and after receiving the unlocking instruction of the control module 317, the locking module 315 permanently unlocks the automatic working device 301. Permanently unlocking the automatic working device 301 indicates that the automatic working device 301 is no longer controlled by the server side and would not be locked again, and the device completely belongs to the user.

The foregoing preset time may also be 0, that is, locking is immediately performed after the installment agreement expires; the foregoing preset time may also be a suitable grace period segment, such as three days or one week, for a user to pay an installment within the time segment. In such an implementation manner, the automatic working device 301 may send a prompt signal to the user at a preset time, such as one week, before the installment agreement expires or when the installment agreement expires to prompt the user that the installment agreement time of the installment payment is about to expire and the user needs to pay an installment, and the prompt signal may also include a prompt to prompt the user how to pay the installment and like. The remainder information may be sound, image, or text information and may be set according to an interactive interface of the automatic working device 301.

In the foregoing two implementation manners, it is also possible to provide one unlocking opportunity to the user after the first locking for the user to further use the device for a period of time and prompt the user that if a newel is not paid, the device cannot be unlocked again after it is locked again.

A rental-type or installment payment-type control method of a electric tool in an embodiment of the present invention is described below, which is specifically a rental-type automatic working device or an installment payment-type automatic working device control method of an automatic working device.

Respective modules of the automatic working device 301 are stated above, and refer to FIG. 7, the control method comprises the following steps:
S1: Monitor and receive an external signal.

Specifically, an external signal is received by using the wireless communication module 321 and transferred to the control module 317.

S2: The control module 317 determines whether the received external signal is of a preset type, if yes, perform step S3, and if not, perform step S4.

S3: Send, according to a preset rule corresponding to the preset type, a locking instruction to the locking module 315.

S4: Execute another relevant instruction corresponding to the external signal.

In an embodiment, the external signal of the preset type is a locking signal sent by the server side 303 after or when the lease expires, and in step S3, at a preset time after receiving the external signal of the preset type, the control module 317 sends a locking instruction to the locking module 315.

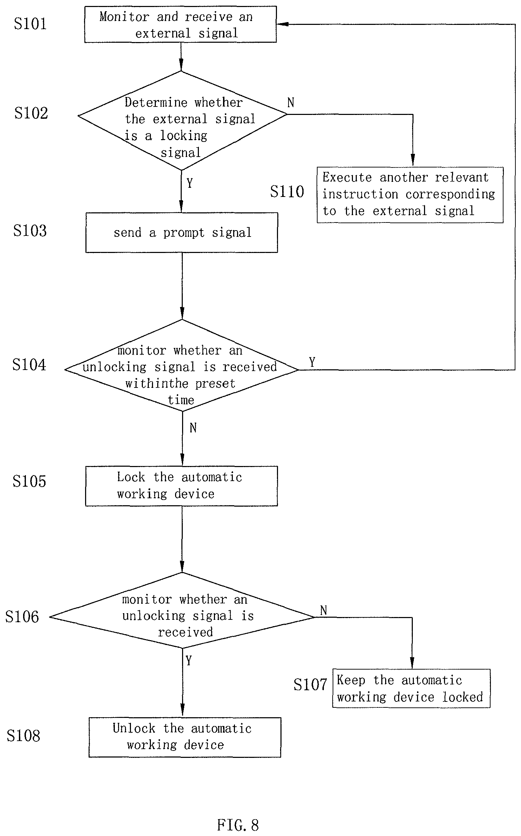

When the external signal of the preset type is a locking signal, based on the control method in FIG. 7, refer to FIG. 8, in this embodiment, the electric tool is specifically an automatic working device, and FIG. 8 describes in detail a specific control process of a rental-type automatic working device or an installment payment-type automatic working device. In this process, the rental-type automatic working device is locked according to an instruction of the server side 303 and does not monitor a tenancy time or an installment agreement time of the installment payment. The process comprises the following steps:
S101: Receive an external signal by using the wireless communication module 321 and transfer the external signal to the control module 317 while receiving the external signal.

Specifically, the control module 317 enables the wireless communication module 321 to keep online to prepare to receive an external signal and send the external signal to the control module 317 after receiving the external signal.

S102: Determine whether the external signal is a locking signal, if yes, perform step S103, and if not, perform step S110.

Step S102 corresponds to the foregoing step S2, and the foregoing external signal of the preset type is a locking signal.

S110: Execute another relevant instruction corresponding to the external signal.

Step S110 corresponds to the foregoing step S4.

S103: After receiving the locking signal, the control module 317 instructs the automatic working device 301 to send a prompt signal.

Specifically, the automatic working device 301 sends sound, text, or image information to notify the user of that a lease time or an installment agreement time of the installment payment expires, and after a preset time (for example, three days or one week), the automatic working device 301 will be locked.

S104: Wait the foregoing preset time, within the preset time, monitor whether an unlocking signal sent by the server side 303 is received, if yes, return to step S101, and if not, perform step S105.

Specifically, within the preset time, the automatic working device 301 still can work; meanwhile, the control module 317 enables the wireless communication module 321 to keep online to prepare to receive an external signal and send the external signal to the control module 317 after receiving the external signal. If an unlocking signal sent by the server side 303 is received within a preset time, step S101 is returned to, that is, give up locking the automatic working device 301 and continue to monitor whether a locking signal of the server side 303 is received; and if no unlocking signal is received with in a preset time, step S105 is performed.

S105: Lock the automatic working device 301 after the preset time.

Specifically, the control module 317 instructs the locking module 315 to lock the automatic working device 301. When the automatic working device 301 is locked, a locked scope may only be the working module 311, that is, only the working module 311 is forbidden to work, but other modules all normally run, and the automatic working device 301 still can execute instructions such as a walking instruction; the locked scope may also be most main modules comprising the walking module 313 and the working module 311, and the automatic working device 301 mainly maintains running of the minimized system, for example, the automatic working device 301 keeps a standby state and cannot walk or work, but can perform communication with the outside and feed back content, such as that the machine has been locked and a fee needs to be paid, when a user enters an instruction. The type of the locking module 315 may be electronic or mechanical, and if the locking module is electronic, the locking module may be an electronically controlled device and after receiving an instruction of the control module, switches off a relevant module such as the walking module and the working module; and an independent physical entity module may also not be needed, and control of the control module is used to implement locking, that is, the control module stops working of an instruction related module such as the walking module and the working module. If the locking module is of a mechanical type, the locking module may include an independent lock to lock the working module or walking module after receiving the locking instruction to forbid an action, so that the working module or walking module cannot continue running, and unlock the working module or walking module after receiving an unlocking instruction.

The steps S103 to S105 correspond to the foregoing step S3.

S106: Monitor whether an unlocking signal sent by the server side 303 is received.

Specifically, the automatic working device 301 is locked, but meanwhile, the wireless communication module 321 keeps online to prepare to receive an external signal and sends the external signal to the control module 317 after receiving the external signal. If an unlocking signal is received, step S108 is performed, and if no unlocking signal is received, step S107 is performed, and the automatic working device 301 keeps locked.

S107: Keep the automatic working device 301 locked.

S108: Unlock the automatic working device 301. After the automatic working device 301 is unlocked, the procedure enters step S101 to continue to monitor and receive an external signal.

Specifically, the control module 317 sends an unlocking instruction to the locking module 315, and the locking module 315 unlocks a relevant module, and as stated above, the relevant module may only be a working module 311 and may also include a walking module 313, a working module 13, and the like.

In this embodiment, the server side 303 is in charge of recording and storing lease information of each automatic working device 301, comprising a rental state (rented or idle), a lease starting time, a lease expiration time, tenant information (an address, a telephone number, a name, and the like), fee payment information, and a use time; or the storage module 333 is in charge of recording and storing installment agreement information of the installment payment of each automatic working device 301, comprising an installment payment state (loan or idle), an installment agreement starting time, an installment agreement expiration time, nth installment payment, information of the to-be-paid balance, loan user information (an address, a telephone number, a name, an e-mail address, and the like), fee payment information, and a use time. The server side 303 monitors a lease expiration time or an installment agreement expiration time of the installment payment, and at a time that is set based on the lease or installment agreement expiration time, sends a locking signal to the automatic working device 301. The time that is set based on the lease or installment agreement expiration time may be a time that is set when the lease or installment agreement expires or that is set before or after the lease or installment agreement expires. However, if the server side sends a locking signal to the automatic working device 301 at a time that is set before the lease or installment agreement expires, after the foregoing preset time, a preset time for locking the automatic working device needs to be long enough to prevent the automatic working device from being locked before the lease or installment agreement expires. For example, if a locking signal is sent by the server side 303 three days before the lease or installment agreement expiration time, the preset time must be longer than or equal to three days. After the lease time or installment agreement time is updated, the server side sends an unlocking signal to the automatic working device 301.

In an optional embodiment, the foregoing step S103 may be canceled, that is, after a locking signal is received, no prompt signal is sent, and step S104 is directly performed. In this embodiment, steps S104 and S105 correspond to the foregoing step S3.

In an optional embodiment, steps S103 and S104 may be canceled at the same time, that is, after a locking signal is received, no prompt signal is sent and an unlocking signal is not monitored in a preset time, step S105 is directly performed, and after the preset time, the automatic working device 301 is locked. In such an embodiment, the preset time is usually 0, that is, after receiving a locking signal, the control module 317 immediately instructs the locking module 315 to lock the automatic working device 301. In such an embodiment, step S105 corresponds to the foregoing step S3.

In such an embodiment, the server side 303 may send a prompt signal to the automatic working device 301 at a preset time before the lease or installment agreement expires, after receiving the prompt signal, similar to the preceding, the automatic working device 301 sends prompt information to prompt the user that the lease is about to end or the installment agreement of installment payment has expired, and a fee needs to be paid.

In an embodiment, the external signal of the preset type may be a tenancy signal carrying lease time information or an installment agreement signal carrying an installment payment expiration time. In step S3, after receiving the tenancy signal or installment agreement signal, the control module 317 stores the lease expiration time or installment payment expiration time to the storage module 319 and sends a locking instruction to the locking module 315 to lock the automatic working device 301 at a preset time after the lease or installment agreement expire expires.

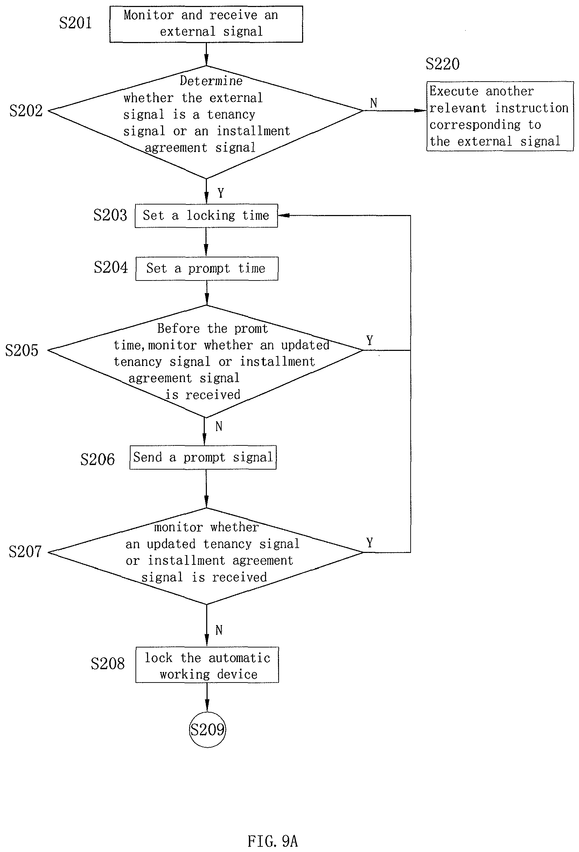

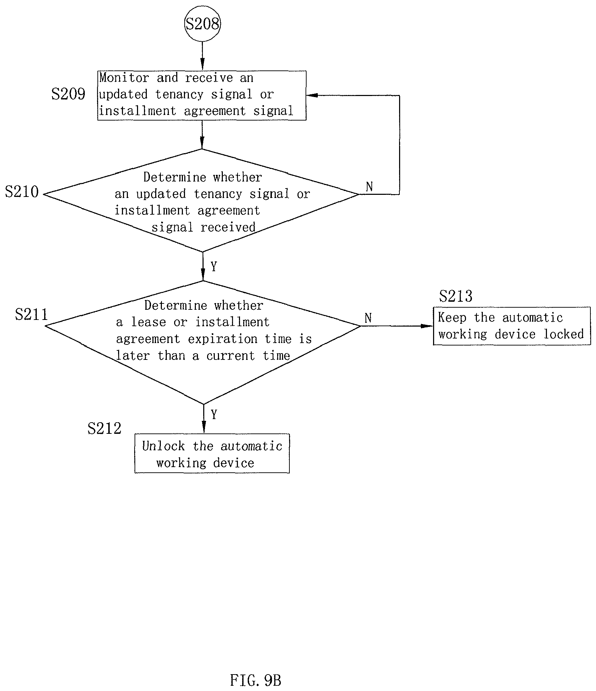

When the external signal of the preset type is a tenancy signal or an installment agreement signal of the installment payment, based on the control method in FIG. 7, refer to FIG. 9A and FIG. 9B, in this embodiment, the electric tool is specifically an automatic working device, and a specific control process of a rental-type automatic working device 301 or an installment payment-type automatic working device 301 is as follows. In this control process, the rental-type automatic working device 301 receives a tenancy signal of the server side 303, where the tenancy signal at least comprises lease expiration time information, and controls, according to the lease expiration time, whether to lock the automatic working device 301; the installment-type automatic working device 301 receives an installment agreement signal of the server side 303, where the installment agreement signal at least comprises installment agreement expiration time information, and controls, according to the installment agreement expiration time, whether to lock the control automatic working device 301. Specifically, the control process comprises the following steps:
S201: Monitor an external signal by using a wireless communication module and transfer the external signal to a control module while receiving the external signal.

Specifically, the control module 317 enables the wireless communication module 321 to keep online to prepare to receive an external signal and send the external signal to the control module 317 while receiving the external signal.

S202: Determine whether the external signal is a tenancy signal or an installment agreement signal, if not, indicating that no tenancy signal or installment agreement signal is received, perform step S210, and if a tenancy signal or an installment agreement signal is received, perform S203.

Step S202 corresponds to the foregoing step S2, and the foregoing external signal of the preset type is a tenancy signal or an installment agreement signal.

S220: Execute another relevant instruction corresponding to the external signal.

Step S220 corresponds to the foregoing step S4.

S203: Set a locking time for sending a locking signal.

S204: Set a prompt time for sending a prompt signal.

In step S203 and step S204, specifically, after a tenancy signal or an installment agreement signal is received, the control module 317 reads content of the tenancy signal or installment agreement signal, for example, a lease starting time, a lease expiration time, and the like or for example, an installment agreement starting time, an installment agreement expiration time, and balance information, stores the content into the storage module 319, and correspondingly sets, according to a tenancy or an installment agreement receiving time, a prompt time for sending a prompt signal and a locking time for sending a locking signal. The prompt time may be set to be three days, one week, or the like before the lease or installment agreement expiration time, and the locking time may be a preset time after the lease or installment agreement expiration time, where the preset time may be 0, and in this case, the automatic working device 301 is immediately locked when the lease or installment agreement expires, or the preset time may also be a grace period greater than 0 for the user to pay a fee.

S205: Before the prompt time, monitor whether an updated tenancy signal or installment agreement signal is received, if yes, return to step S203, and if not, perform step S206.

S206: Send a prompt signal.

Specifically, if the lease or installment agreement expiration time is still not updated after the prompt time arrives, the control module 317 instructs the automatic working device 301 to send a prompt signal to prompt the user that the lease is about to expire or the installment agreement of the installment payment is about to expire, and the user should pay a renewal or ends the lease or pays an installment. The prompt signal may be one or more of text, an image, a sound, and the like and is specifically set according to an interactive interface of the automatic working device 301.

S207: Before the locking time, that is, within a preset time, monitor whether an updated tenancy signal or installment agreement signal is received, if yes, return to step S203, and if not, perform step S208.

S208: Lock the automatic working device.

Specifically, if after the locking time arrives, the lease or installment agreement expiration time is still not updated, the control module 317 instructs the locking module 315 to lock the automatic working device 301. When the automatic working device 301 is locked, a locked scope may only be the working module 311, that is, only the working module 311 is forbidden to work, but other modules all normally run, and the automatic working device 301 still can execute instructions such as a walking instruction; the locked scope may also be most main modules comprising the walking module 313 and the working module 311, and the automatic working device 301 mainly maintains running of the minimized system, for example, the automatic working device 301 keeps a standby state and cannot walk or work, but the wireless communication module 321 and the control module 317 keep working, so as to be able to perform communication with the external server side 303 and receive an external signal such as a tenancy signal or installment agreement signal of the server side. Meanwhile, the automatic working device 301 can feed back content, such as that the machine has been locked and a fee needs to be paid, when a user enters an instruction.

The foregoing steps S203 to S208 correspond to the foregoing step S3.

S209: Monitor an updated tenancy or installment agreement signal.

Specifically, after the automatic working device 301 is locked, the wireless communication module 321 and the control module 317 keep working and can continue receiving an external signal.

S210: Determine whether an updated tenancy signal or installment agreement signal is received, if yes, perform step S211, and if not, return step S209 to continue to monitor the tenancy signal or installment agreement signal.

S211: Perform comparison in the updated tenancy signal to determine whether a lease or installment agreement expiration time is later than a current time, if yes, perform step S212, and if not, perform step S213.

Specifically, the control module 317 analyzes content of the tenancy or installment agreement signal, and stores a new lease or installment agreement expiration time included in the content into the storage module 319 to replace the old lease or installment agreement expiration time and compares the new lease or installment agreement expiration time with the current time; if the new lease or installment agreement expiration time is later than the current time, indicating that the user completes renewal payment and the current time is in the new tenancy or installment agreement, the procedure enters step S212 to perform unlocking; and if the new lease or installment agreement expiration time is still earlier than the current time, indicating that although the user pays a renewal, only a part of the historical arrears is paid, and the user is still not in a new tenancy or installment agreement currently, the procedure enters step S213.

S212: Unlock the automatic working device 301.

Specifically, the control module 317 sends an unlocking instruction to the locking module 315, and the locking module 315 unlocks the automatic working device 301.

S213: Keep the automatic working device 301 locked.

In this embodiment, the server side 303 is in charge of recording and storing lease information of each automatic working device 301, comprising a rental state (rented or idle), a lease starting time, a lease expiration time, tenant information (an address, a telephone number, a name, and the like), fee payment information, and a use time, and sending the lease information to the automatic working device when the lease starts and each time the lease time is subsequently updated; or when the automatic working device 301 is of an installment payment type, the storage module 333 is in charge of recording and storing installment agreement information of each automatic working device 301, comprising an installment payment state (loan or idle), an installment agreement starting time, an installment agreement expiration time, loan user information (an address, a telephone number, a name, an e-mail address, and the like), fee payment information, and a use time, and sending installment payment expiration time information and balance information to the automatic working device when the installment agreement starts or each time the installment agreement time is subsequently updated.

In an optional implementation manner, steps S204 to S206 can be canceled, that is, the automatic working device 301 does not set a time to send a prompt signal and is directly locked after waiting a preset time. In such an embodiment, steps S203, S207, and S208 correspond to the foregoing step S3.

The present invention is not limited to the exemplified specific embodiment structures, the embodiments above only represent several implementation manners of the present invention, and the descriptions thereof are specific and detailed, but should not be understood as limitations to the patent scope of the present invention. It should be pointed out that for several deformations and improvements that may also be made by persons of ordinary skill in the art without departing from the idea of the present invention all fall within the protection scope of the present invention. Therefore, the protection scope of the present invention patent shall be subject to the appended claims.

## Claims

1. An electric tool remote information collection system, comprising an electric tool and a server, wherein
said electric tool comprises:
a housing;
a motor located inside said housing;
a working assembly, driven by said motor to carry out specific work;
an information collection unit, wherein said information collection unit collects maintenance warning information and/or research and development reference information, said maintenance warning information provides information related to whether said electric tool needs maintenance, and said research and development information provides information related to subsequent research and development of said electric tool;
an information processing unit, which processes said maintenance warning information and/or research and development reference information according to a preset procedure; and
a communication unit, wherein said communication unit performs communication with said server and sends said maintenance warning information and/or research and development reference information sent by said information processing unit to said server; and
said server comprises a server communication unit, wherein said server communication unit performs communication with said communication unit of said electric tool to collect said maintenance warning information and/or research and development reference information.

2. The electric tool remote information collection system according to claim 1, wherein:
said electric tool is an intelligent tool, a robotic gardening tool, or a robotic mower.

3. The electric tool remote information collection system according to claim 2, wherein:
said robotic gardening tool can be docked with an external charging station to get charged, said charging station is provided with a charging station communication unit, and said communication unit performs communication with said server via said charging station communication unit.

4. The electric tool remote information collection system according to claim 1, wherein: said server further comprises a maintenance warning analysis module and a maintenance warning notification module, said maintenance warning analysis module analyzes, according to said preset procedure, said received maintenance warning information to obtain maintenance type information, said maintenance type information indicates a type of maintenance that said electric tool needs to perform; and said maintenance warning notification module sends an instruction that notifies a user of a maintenance type that said electric tool needs.

5. The electric tool remote information collection system according to claim 4, wherein: said maintenance warning notification module notifies said user by using an e-mail, an SMS, network communications software, or social network information.

6. The electric tool remote information collection system according to claim 4, wherein: said maintenance warning information comprises component status information, and said component status information comprises at least one of a motor total running time length, a brush wear status, a blade total working time length, a blade wear status, a battery cycle, and a battery full voltage; and said maintenance type comprises at least one of replacing a motor, replacing a brush, replacing a blade, and replacing a battery.

7. The electric tool remote information collection system according to claim 1, wherein: said server also comprises a research and development reference information processing module and a research and development reference information output module, said research and development reference information analysis module processes, according to said preset procedure, said received research and development reference information; and said research and development information output module outputs said processed research and development reference information.

8. The electric tool remote information collection system according to claim 1, wherein:
said research and development reference information comprises environment information and/or usage mode information; said environment information comprises at least one of grass status information, humidity information, temperature information, temperature difference information, illumination information, and lawn area information; and said usage mode information comprises at least one of a usage frequency, a working time plan, a working time segment, a working time length, a working current, and a motor rotation speed.

9. An electric tool, comprising:
a housing;
a motor located inside said housing;
a working assembly, driven by said motor to carry out specific work;
an information collection unit, wherein said information collection unit collects maintenance warning information and/or research and development reference information, said maintenance warning information provides information related to whether said electric tool needs maintenance, and said research and development information provides information for reference by subsequent research and development of said electric tool;
an information processing unit, which processes said maintenance warning information and/or research and development reference information according to a preset procedure; and
a communication unit, wherein said communication unit performs communication with an external server and sends said processed maintenance warning information and/or research and development reference information to said server.

10. The electric tool according to claim 9, wherein:
said electric tool is an intelligent tool, a robotic gardening tool, or a robotic mower.

11. The electric tool according to claim 10, wherein:
said robotic gardening tool can be docked with an external charging station to get charged, said charging station is provided with a charging station communication unit, and said communication unit performs communication with said server via said charging station communication unit.

12. The electric tool according to claim 9, wherein:
said communication unit receives maintenance type information sent by said server, said maintenance type information indicates a type of maintenance that said electric tool needs to perform, and said electric tool comprises a display unit configured to display said maintenance type information.

13. The electric tool according to claim 9, wherein:
said maintenance warning information comprises component status information, and said component status information comprises at least one of a motor total running time length, a brush wear status, a blade total working time length, a blade wear status, a battery cycle, and a battery full voltage.

14. The electric tool according to claim 9, wherein:
said research and development reference information comprises environment information and/or usage mode information; said environment information comprises at least one of grass status information, humidity information, temperature information, temperature difference information, illumination information, and lawn area information; and said usage mode information comprises at least one of a usage frequency, a working time plan, a working time segment, a working time length, a working current, and a motor rotation speed.

15. An electric tool remote information collection apparatus, comprising a server, which comprises a server communication unit, wherein:
said server communication unit performs communication with a communication unit of an electric tool to collect maintenance warning information and/or research and development reference information, said maintenance warning information provides information related to whether said electric tool needs maintenance, and said research and development information provides information related to subsequent research and development of said electric tool.

16. The electric tool remote information collection apparatus according to claim 15, wherein: said server further comprises a maintenance warning analysis module and a maintenance warning notification module, said maintenance warning analysis module analyzes, according to a preset procedure, said received maintenance warning information to obtain maintenance type information, said maintenance type information indicates a type of maintenance that said electric tool needs to perform; and after receiving said maintenance type information, said maintenance warning notification module sends an instruction that notifies a user of a maintenance type that said electric tool needs.

17. The electric tool remote information collection apparatus according to claim 16, wherein: said maintenance warning information comprises component status information, and said component status information comprises at least one of a motor total running time length, a brush wear status, a blade total working time length, a blade wear status, a battery cycle, and a battery full voltage; and said maintenance type comprises at least one of replacing a motor, replacing a brush, replacing a blade, and replacing a battery.

18. The electric tool remote information collection apparatus according to claim 16, wherein: said maintenance warning notification module notifies said user of said maintenance type that said electric tool needs by using an e-mail, an SMS, network communications software, or social network information; or sends said maintenance type information to said electric tool.

19. The electric tool remote information collection apparatus according to claim 15, wherein: said server also comprises a research and development reference information processing module and a research and development reference information output module, said research and development reference information processing module processes, according to said preset procedure, said received research and development reference information; and said research and development information output module outputs said processed research and development reference information.

20. The electric tool remote information collection apparatus according to claim 19, wherein said research and development reference information comprises environment information and/or usage mode information; said environment information comprises at least one of grass status information, humidity information, temperature information, temperature difference information, illumination information, and lawn area information; and said usage mode information comprises at least one of a usage frequency, a working time plan, a working time segment, a working time length, a working current, and a motor rotation speed.

21. An electric tool remote information collection method, comprising the following steps:
collecting maintenance warning information and/or research and development reference information, wherein said maintenance warning information provides information related to whether said electric tool needs maintenance, and said research and development information provides information related to subsequent research and development of said electric tool;
processing said maintenance warning information and/or research and development reference information according to a preset procedure; and
sending said maintenance warning information and/or research and development reference information sent by said information processing unit to a server.

22. The electric tool remote information collection method according to claim 21, further comprising the following steps:
analyzing, according to said preset procedure, said maintenance warning information to obtain maintenance type information, wherein said maintenance type information indicates a type of maintenance that said electric tool needs to perform; and
sending an instruction that notifies a user of a maintenance type that said electric tool needs.

23. The electric tool remote information collection method according to claim 21, further comprising the following steps:
processing, according to said preset procedure, said research and development reference information received by said server; and
outputting said processed research and development reference information.
